# EUROPEAN PATENT SPECIFICATION

(11) **EP 1 509 314 B1**
(45) Date of publication and mention of the grant of the patent: **22.07.2009**
(21) Application number: 03753051.6
(22) Date of filing: 15.05.2003
(51) Int. Cl.: B01D 67/00, B01D 69/02

(54) **METHOD FOR PRODUCING A HIGH-THROUGHPUT ASYMMETRIC MEMBRANE**
VERFAHREN ZUR HERSTELLUNG EINER ASYMMETRISCHEN MEMBRAN MIT HOHEM DURCHSATZ
PROCEDE POUR LA FABRICATION D'UNE MEMBRANE ASYMETRIQUE A HAUT DEBIT

(30) Priority: 17.05.2002 US 381468 P
(43) Date of publication of application: 02.03.2005
(73) Proprietor: MILLIPORE CORPORATION, Billerica, MA 01821 (US)
(72) Inventor: KOOLS, Willem, Winchester, MA 01890 (US); GOULDING, Claire, Groton, MA 01450-2071 (US); CALNAN, Daniel, Lynn, MA 01904 (US); DOLAN, Timothy, Groton, MA 01450 (US)
(74) Representative: Henkel, Feiler & Hänzel
(86) International application number: PCT/US2003/015390
(87) International publication number: WO 2003/097219

(56) References cited:
- EP-A- 0 194 546
- EP-A- 0 296 519
- EP-A- 0 499 381
- WO-A-01/89673
- WO-A-02/04083
- WO-A-94/12269
- GB-A- 2 238 966
- US-A- 3 846 521
- US-A- 4 148 734
- US-A- 4 629 563
- US-A- 4 776 936
- US-A- 4 868 222
- US-A- 5 246 743
- US-A- 5 869 174
- DATABASE WPI Section Ch, Week 198822 Derwent Publications Ltd., London, GB; Class A88, AN 1988-151895 XP002250996 & JP 63 093309 A (FUJI PHOTO FILM CO LTD), 23 April 1988 (1988-04-23)

## Description

### Field

In general, the present invention relates to a methods for producing asymmetric membranes and, more particularly, to a method of producing an asymmetric membrane having a substantially reticulated surface microstructure.

### Background

Asymmetric membranes - in use for many years - are characterized by having the pore size of the membrane vary as a function of location within the thickness of the membrane. The most common asymmetric membrane has a gradient structure, in which pore size gradually and continually increases from one surface (often referred to as the "tight" side) to the other (often referred to as the "open" side). These membranes are valued as they have a higher flux than comparable symmetric membranes. When used in the configuration with their larger pore side upstream, these membranes have greater throughput in many cases as compared to the comparable symmetric membranes. See, U.S. Pat. No. 4,261,834, issued to D.M. de Winter on April 14, 1981. The asymmetrical membranes are used in a variety of applications such as food and beverage filtration, pharmaceutical and biopharmaceutical manufacture, laboratory filtration, water filtration and the like. Asymmetrical membranes based on aromatic sulphones such as polyethersulphones are preferred as they are capable of use at elevated temperatures and highly acidic and basic conditions.

Asymmetric membranes all have a thick, dense surface region or in many cases a skin formed on the surface and extending somewhat into its depth. See, U.S. Pat. No. 4,629,563. issued to W. Wrasidlo on December 16, 1986. The dense surface and/or skin can be seen through the use of photomicrographs. The dense surface is shown as a continuous dense film surface punctuated by a myriad of pores. The skin can be seen in cross-sectional photomicrographs as a dense layer extending into the thickness of the membrane. See, U.S. Pat. No. 4,629,563.

More recently, a multiple layered asymmetric membrane has been produced. See PCT International Publication No. WO 01/89673. This membrane is formed of two or more layers that are co-cast simultaneously from two or more different solutions of membrane precursor material. Unique asymmetrical structures can be formed with the membranes of this invention.

While most asymmetric membranes work satisfactorily on water or aqueous based solutions, they tend to prematurely dog and have poor throughput with viscous or heavily loaded streams, even when used in the preferred open side upstream configuration. Such streams are relatively common and can include various food streams such as syrups and sugary products, serum streams as used in the biopharmaceutical or laboratory settings or blood, plasma and other blood products.

In light of the above, there is a need for a membrane having high throughput and flux, suitable for filtering high volumes of fluid, and for filtering quickly a given volume of liquid.

EP-A-0194546 discloses a method for applying plasma- or corona discharge to asymmetric porous membranes in order to produce asymmetric membranes which are chemically functionalized. The document states that the amount of deposition on the membrane is to be kept sufficiently low to avoid clogging of the pores of the membrane separation layer.

The document US-A-4148734 discloses a process for producing a filter material consisting substantially of a microporous and/or macroporous sheet structure obtained by coagulation of a polymer solution in which at least one skin surface area of the sheet structure is completely abraded and removed, preferably according to the wet grinding technique. The document also states that the method can be applied to a filter material with asymmetrical pore configuration.

### Summary

The present invention provides a method of producing an asymmetrical microporous membrane suitable for high throughput applications comprising the steps defined in claim 1.

The present invention is directed to produce a microporous asymmetrical membrane formed of one or more layers, wherein the "tight" side of the membrane has an "opened" or otherwise highly porous reticulated surface, said surface being configured to promote high throughput. The microporous asymmetrical membrane has high throughput and high flux, even when used for viscous fluids such as serum or plasma.

While the present invention is not intended to be limited to any theory used In explanation thereof, it is believed that the highly porous reticulated surface provides comparatively more openings for flow, and provides greater interconnectivity among different pores in the structure, hence reducing the propensity of the pores to plug completely.

The membrane surface can be formed by ablation or solvation.

### Brief Description of the Drawings

Figure 1A shows a photomicrograph of a "skinless" asymmetrical membrane in cross-section.
Figure 1B shows the tight surface of the membrane of Figure 1A.
Figure 2A shows photomicrograph of a cross-section of a two-layered asymmetrical membrane similar to one produced according to the present invention.
Figure 2B shows the tight surface of the membrane of Figure 2A.
Figure 3 is a graph of the flow times of the membranes in Example 1.
Figure 4 is a graph of the flux of the membranes in Example 1.
Figure 5 is a graph of the flow times of the membranes in Example 2.
Figure 6 is a graph of the flux of the membranes in Example 2.
Figure 7 shows a photomicrograph of the tight surface of a low porosity surfaced membrane according to the prior art.
Figure 8 shows a photomicrograph of the tight surface of a low porosity surfaced membrane according to the prior art after being surface modified.
Figure 9 is a graph of the nearest neighbor pore data.
Figure 10 shows a photomicrograph of the tight surface of a membrane according to the prior art.
Figure 11 shows a photomicrograph of the tight surface of a membrane similar to one produced according to the present intention.

### Detailed Description

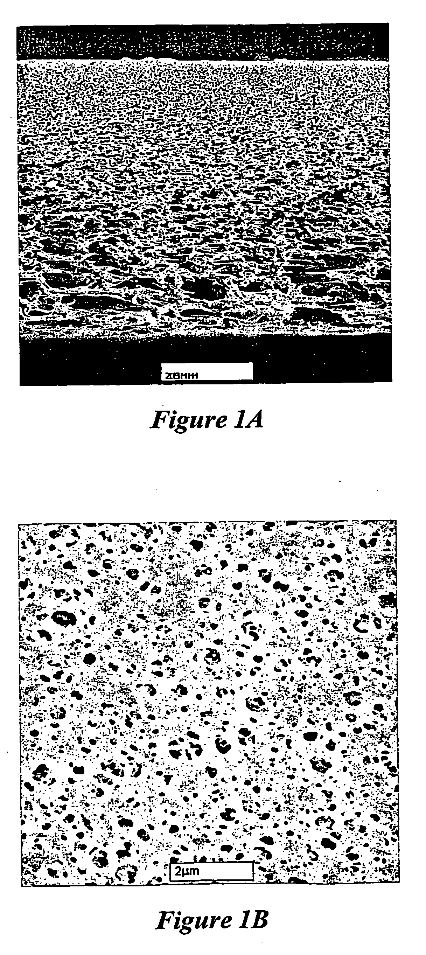

Certain microporous asymmetrical membranes have a "skin" formed in their tight side. *See* e.g. U.S. Pat. No. 4,629,563. Those that don't have the "skin" often have a "skin surface" or otherwise reduced porosity tight surface. Figures 1A and 1B - illustrative of such prior art - show a cross section and a tight surface photomicrograph, respectively, of a skin-surfaced asymmetrical membrane, In Figure 1B, the tight surface of the membrane has a relatively low percentage of porosity.

The present invention, in contrast, provides an asymmetrical microporous membrane well-suited for high throughput filtration, the membrane being distinguished by its reticulated porous surface, formed on the membrane rather than or instead of a skin or skin-type surface. In combination with its other structural features, the reticulated porous surface is configured for, and hence affords, a bubble point normalized serum flow time of less than about 2.

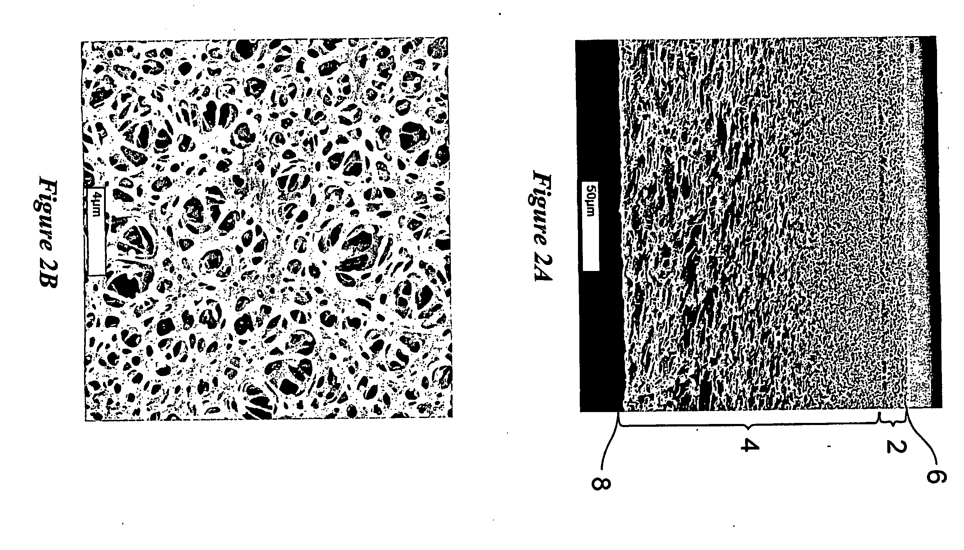

An example of a membrane similar to one produced according to the present invention is shown in Figures 2A and 2B. In this example, the structure is formed of two layers, each cast from a different solution of membrane precursor, according a base methodology that is otherwise disclosed in PCT international Publication No. WO 01189673. As seen in Figure 2A, the structure shows the two layers 2 and 4 with asymmetric porosity throughout the structure from one side 6 to the other 8. The top layer 2 is relatively thinner than the bottom layer. As shown in Figure 2B, the surface of the tight side of the membrane has an open, highly reticulated porous surface.

According to the method of the present invention an asymmetrical microporous membrane is made from a preformed single- or multiple-layered asymmetrical membrane in which the porosity of the tight side is too low for acceptable throughput or flux for its predetermined intended use. In accord with the invention, the tight surface of the membrane is modified to create a surface with higher porosity (*i.e*., the surface is "opened"), yielding an open, reticulated surface.

Post-formation modification is applicable to both single-layered asymmetric membranes and two-layered membranes made as per WO 01/89673 (*i.e.*, in which the porosity of the tight side is still too low for acceptable throughput or flux).

Post-formation surface modification can be accomplished in a variety of ways: chemically, or by exposure to irradiation.

Chemically, certain membrane surfaces can be exposed to a solvent to partially remove surface polymer material. Chemical modification has several advantages, among which is that the depth to which the solvent influences removal can be controlled. For example, the pores of the membrane can be filled with a non-solvent immiscible with the surface-modifying solvent, thus limiting interaction of the solvent to exposed non-solvent or other diluent will affect the concentration, and hence, reactivity of the solvent. Desirable methods will employ combination of both filling the pores with non-miscible non-solvent and controlling solvent concentration.

Certain membrane surfaces can also be exposed to electromagnetic radiation of an intensity, a wavelength, and for a duration sufficient and/or appropriate to remove, or render removable, exposed portions of the surface polymer material. Methods of irradiation include, but are not limited to, corona discharge, plasma ablation, and laser ablation. Details of such methods are available in the patent and technical literature.

When forming a multi-layered structure, a preferred method follows closely the regimen prescribed in PCT International Publication No. WO 01/89673. In particular, two different membrane precursor solutions are simultaneously cast onto a support to form thereon the two or more layers. The solution coated support is then processed in a coagulation bath. Optionally, the solvent or solvents are extracted. The support, if temporary, is then removed. The resultant two layer membrane is then dried, rendering it essentially ready for use.

One can form the different solutions for the different layers by varying the concentration of polymer, solvent or non-solvent, as well as the viscosity, additives or treatments of the solutions or combinations of any of these to create the desired multi-layered structure. Other methods, including sequential casting, air casting, melt casting, and other phase inversion type methods, are well known and can be used to make the multi-layered structures.

A single-layered structure can be made according to any of U.S. Pats. Nos. 4,629,563, 5,444,097, 5,869,174, and 5,886,059. In these processes, one forms a solution, either stable or metastable, and then casts the solution onto a support, optionally exposes the material to the atmosphere for a set period of time, then places the membrane into a coagulation bath. Optionally, one removes the solvent and the support, if temporary, and then dries the resultant membrane.

Preferred polymers for the embodiment include but are not limited to PVDF, nylons such as Nylon 66, polyamides, polyimides, polyethersulphones, polysulphones, polyarylsulphones, PVC, PET, polycarbonates, cellulose, regenerated cellulose, cellulose esters such as cellulose acetate or cellulose nitrate, polystyrenes, polyetherimides, acrylic polymers, methacrylic polymers, copolymers of acrylic or methacrylic polymers, or blends of any of the above and the like.

The polymer solutions of the present invention typically comprise at feat one polymer and at least one solvent for the polymer or polymers. The solution may contain one or more components that are poor solvents or non-solvents for the polymer or polymers. Such components are sometimes called "porogens" in the art. The solutions are preferably homogeneous. They can optionally contain one or more components, which are non-solvents for the polymer. The polymer solution can be either stable in time (good solvent quality) or meta-stable in time. The solution also can potentially have a lower critical solution temperature or an upper critical solution temperature. Example components of such solutions are well known in the art. Useful solvents include dimethyl formamide, N,N-dimethylacetamide, N-methyl pyrrolidone, tetramethylurea, acetone, dimethylsulfoxide. Useful porogens include formamide, various alcohols and polyhydric compounds, water, various polyethylene glycols, and various salts, such as calcium chloride and lithium chloride.

One can form the layers of a multi-layered structure from the same polymer and solvent, varying the concentration of components, viscosity, additives and treatment (before, during or after formation) or one can use different polymers for the different layers. When using different polymers one must select polymers that are compatible. Additionally, the solvents and phase separation materials should be the same if possible or at least compatible so that they do not adversely affect the other layer(s).

The microporous structures of the present invention may have an average pore size of from about 0.01 microns to about 10 microns, preferably from about 0.01 to about 2 microns.

Asymmetrical membranes may have a pore size gradient of from about 2:1 to about 1000:1, preferably from about 2:1 to about 100:1. This asymmetry is measured by comparing the average pore size on one major surface of the layer with the average pore size of the other major surface of that layer. In accord with the invention, one can create two or more asymmetrical layers, each having a different or similar asymmetry.

Additionally, one can vary the thickness of the membrane and, if two or more layers are used, the thickness of each layer within a wide range and still obtain a self-supporting, integral multi-layered structure. Typically, it is desirable for the thickness of the membrane structure to be between 50 and 200 microns as this provides good filtration characteristics and self support. With the present invention one can still achieve the same overall thickness but can control the relative thickness of one layer to the other to create unique and desirable membrane structures. Typically, one can make one layer as thin as 10 microns and it will result in an integral multilayered structure so long as the remaining structure is a suitable thickness. Thus, for example, In a 150 micron thick membrane, one can have a first layer that is from about 10 to about 140 microns thick while the other is correspondingly from about 140 microns to about 10 microns in thickness.

### Example and Comparison Examples

### Comparative Example 1

A test solution comprising 1 liter of Fetal Bovine Serum (FBS) (available from JRH Bioscience, Inc. of Lenexa, Kansas), 1 bottle of Dubelco Modified Eagle medium (133.7 g) (available from Invitrogen/Gibco of Carlsbad, California). 37 grams of sodium bicarbonate, 100 ml Hepes buffer solution (available Sigma-Aldrich US of St-Louis. Missouri), and 10 liters deionized water was prepared. The solution was stirred before use.

A 47 mm disk was placed in a vacuum filter holder. The flow time in seconds was measured for 500 ml of water and for various volumes of the solution using 54182.21 Pa (16 inches Hg) on three different asymmetrical membranes: i.e., an asymmetrical polysulfone membrane from US Filter Corporation (now Pall Corporation of East Hills, New York); a 0.2 micron Express membrane available from Millipore Corporation of Bedford, Massachusetts; and 4 membranes of the present invention (Samples 1A-D).

The water flow rates were as follows:

| **Membrane** | **Bubble Point KPa (psi)** | **Water Flow Rate (500ml)(sec)** | **Porosity (%)** |
|---|---|---|---|
| USFilter | 413.68 (60) | 75 | 81 |
| Millipore Express | 461.95 (67) | 99 | 78 |
| Sample 1A | 438.51 (63.6) | 68 | 79 |
| Sample 1B | 528.14 (76.6) | 72 | 79 |
| Sample 1C | 435.06 (63.1) | 64 | 79 |
| Sample 1D | 466.77 (67.7) | 61 | 79 |

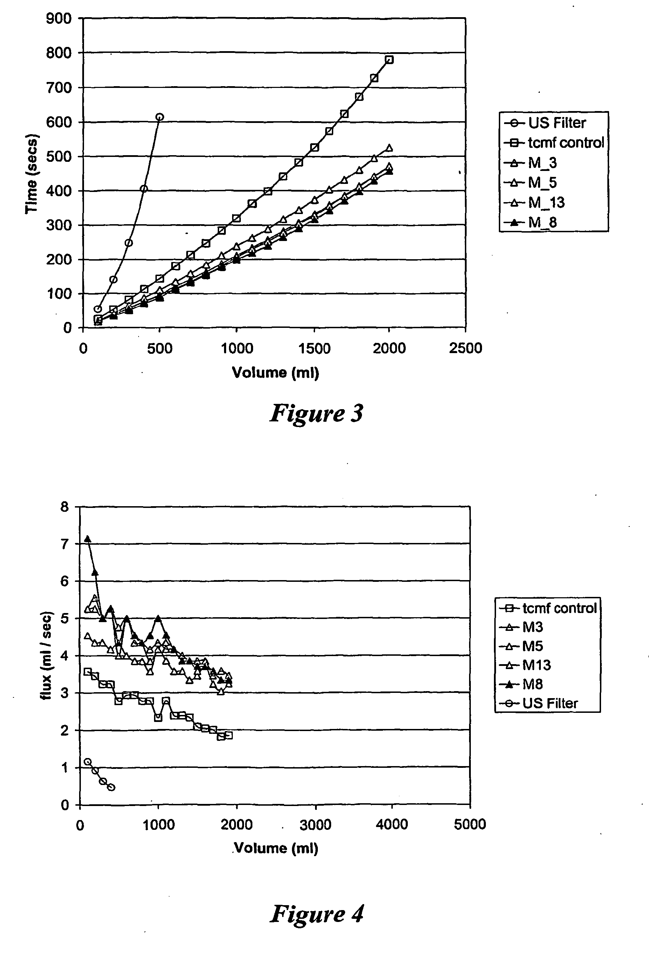

Plotting the flow times needed to filter certain amounts of the solution, the graph shown in Figure 3 was generated. It can be seen therein that the membranes of the comparative example have a clear advantage, a shorter flow time, over the membranes of the prior art. Good results are obtained in respect of the total volume that can be filtered by such membranes, as well as the speed at which such membranes filter a standard amount of solution (500 ml).

Surprisingly, the flux of the Sample membranes is higher, and remains higher, than the prior art membranes. (See Figure 4).

Based upon this data, one can extrapolate and estimate the total amount of fluid that can be filtered by these filters with sufficiently high flux:

| **Membrane** | **Total Volume Filtered Estimated (Liters)** | **Initial Flux (at 100ml filtered)** | **Flux at 500 ml Filtered (ml/sec)** |
|---|---|---|---|
| US Filter | .6 | 1.2 | 0.4 |
| Millipore Express | 3.7 | 3.6 | 2.7 |
| Sample 1A | 5.7 | 5.0 | 4.0 |
| Sample 1B | 5.2 | 4.3 | 4.3 |
| Sample 1C | 5.7 | 5.0 | 4.3 |
| Sample 1 D | 5.7 | 5.0 | 4.7 |

### Comparative Example 2

A test solution comprising of 250 ml New Born Calf Serum (Gibco BRL), 1 bottle of Dubelco Modified Eagle medium(133.7 g.) , 37 grams of sodium bicarbonate, 100 ml Hepes buffer solution, and 10 liters deionized water was prepared. The solution was stirred before use.

A 47 mm disk was placed in a vacuum filter holder Using a vacuum of 54182.21 Pa (16 inches Hg), the flow time in seconds was measured for various volumes of the solution on a 0.2 micron Express membrane available from Millipore Corporation of Bedford, Massachusetts, and 4 sample membranes (Samples 2A-D).

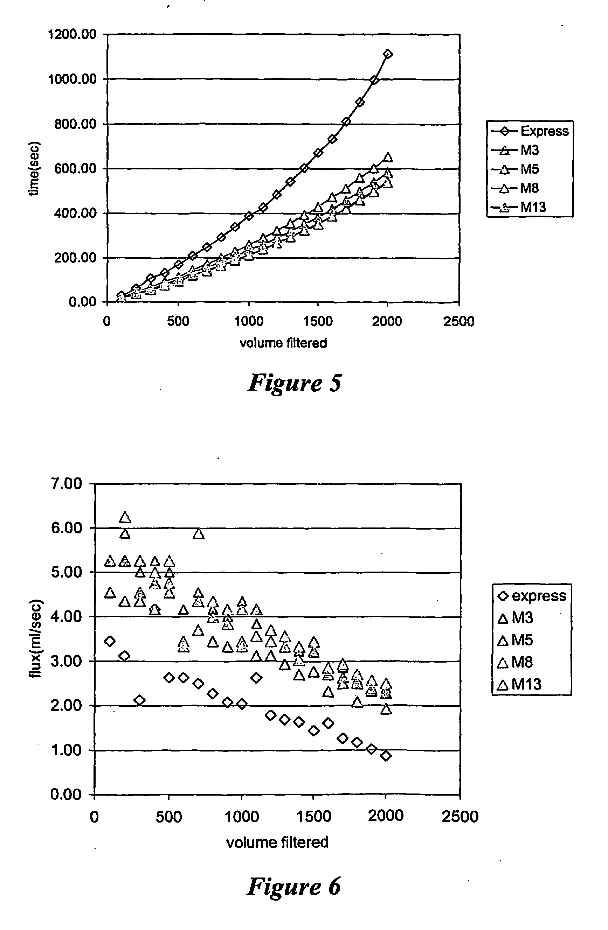

Figures 5 and 6 - prepared from data from this Example - shows that the sample membranes outperformed the prior art membrane.

Plotting the flow times to filter certain volumes of the solution indicates that the sample membranes have an advantage over existing membranes in both flow and the total volume that can be filtered. Estimations on the volume that can be filtered through a 47 mm diameter disk based on the data of this experiment are given below:

| **Membrane** | **Total Volume Filtered Estimated (Liters)** | **Initial Flux (at 100ml filtered)** | **Flux at 500 ml (ml/sec)** |
|---|---|---|---|
| Millipore Express | 2.7 | 3.5 | 2.6 |
| Sample 2A | 3.6 | 5.2 | 5.0 |
| Sample 2B | 3.5 | 4.6 | 4.6 |
| Sample 2C | 3.7 | 5.3 | 5.2 |
| Sample 2D | 3.5 | 5.3 | 4.8 |

### Comparative Example 3

A co-cast membrane was made in accordance with the methodology described in PCT International Publication No. WO 01/89673 (18%+12% PES-NMP-TEG). The total thickness of the resultant membrane was about 140 micron, with the upper layer within the membrane measuring about 10 microns in thickness. This membrane had a similar bubble point as a 0.45 rated Supor membrane (Pall-Gelman). Flow was tested on both water and fetal bovine serum. The following table shows the decreased time for this membrane to filter 500 ml of serum through a 47 mm disk. For reference, an 0.2 rated Express(TM) membrane was used.

| **time FBS(sec)** | **Orientation** | **BP IPA kPa (psi)** | **Flow time water (sec)** | **Flow time FBS (sec)** |
|---|---|---|---|---|
| Express | Shiny Side Downstream | 151.68 (22) | 100 | 162 |
| Example 3 | Shiny Side Upstream | 79.29 (11.5) | 32 | 95 |
| Example 3 | Shiny Side Downstream | 79.29 (11.5) | 32 | 58 |
| 0.45 Supor | Shiny Side Downstream | 82.73 (12) | 68 | 138 |
| 0.45 Supor | Shiny Side Upstream | 82.73 (12) | 68 | Unable to filter 500 ml |

### Comparative Example 4

A fetal bovine serum test was performed on 4 different types of membranes: a single layer asymmetric membrane of the prior art (ExpressTM membrane), a PES co-cast membrane, a Sartopore 2 asymmetrical membrane (both layers in orientation of the cartridge from which they were removed), and the 0.2 rated membrane layer of the Sartopore 2 product (available from Sartorius AG of Goettingen, Germany).

This resulted in the following times (in seconds) to filter 500 ml of FBS:

| **Membrane** | **Flow Time FBS (sec)** |
|---|---|
| Express TM | 159 |
| Express TM | 169 |
| Example 4 | 113 |
| Sartopore 2 (0.45 + 0.2) | 500 |
| Sartopore 2 (0.2 layer) | >900 for 450 ml |

### Comparative Example 5

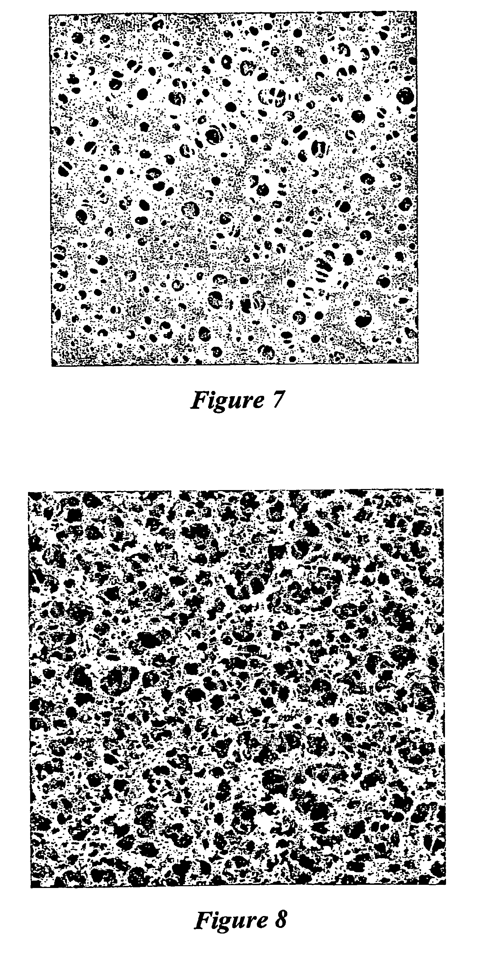

Two pieces of single layer microporous asymmetric membrane with different bubble points (Millipore Express 0.2 micron membrane available from Millipore Corporation of Bedford, Massachusetts) were obtained. The low porosity surface on the tight side of each membrane was ablated in a plasma chamber using oxygen. Figure 7 shows the tight surface of one of the membranes before plasma ablation. Figure 8 shows the tight surface of that membrane after plasma ablation.

The ablated membranes were tested for flow and throughput.

As observed, the removal of the low porosity layer by plasma ablation resulted in an increased performance over non-treated samples. In particular, there was an approximately 25% decrease in water flow time as compared to non-treated membranes. For fetal bovine serum (FBS) flow time decreased by about 17%.

The data suggests that the improved performance is not simply a function of the change in bubble point. In this regard, one can assume that a linear relationship exists between water bubble point and water flow time and FBS flow time. The relationship, determined from empirical data, was 6.96 sec/Pa (4.8 sec/psi) for water flow time and 4.06 sec/Pa (2.8 sec/psi) FBS. With this relationship, the performance improvement cannot be attributable to the bubble point change alone. A change in only the bubble point would create an expected performance increase of only about 10% for water flow time and 4% for FBS. Increased surface porosity has a measurable positive impact on the membrane performance.

### Comparative Example 6

To quantify the differences between a typical tight-sided asymetric membrane of the prior art and a highly reticulated structure similar to one produced according to the present invention, the pore distributions on the tight of side of a prior art membrane (Millipore Express 0.2 membrane) and a membrane similar to one produced according to the present invention (a two layered structure having a pore size rating of 0.2 micron) was analyzed. Using photomicrographs of the respective tight surfaces, two measurements were made: "fractionated area percent", which is a measure of the surface porosity; and "nearest neighbor distance", which is a measure of the average distance between pores. Based upon these measurements, the following data was gathered.

| | **Fractionated Area Percent** | | **Nearest Neighbor** | |
|---|---|---|---|---|
| | **Prior Art** | **Invention (similar)** | **Prior Art** | **Invention (similar**) |
| Mean | 6.778 | 16.010 | 0.571 | 0.398 |
| Standard Deviation | 0.755 | 0.978 | 0.186 | 0.099 |

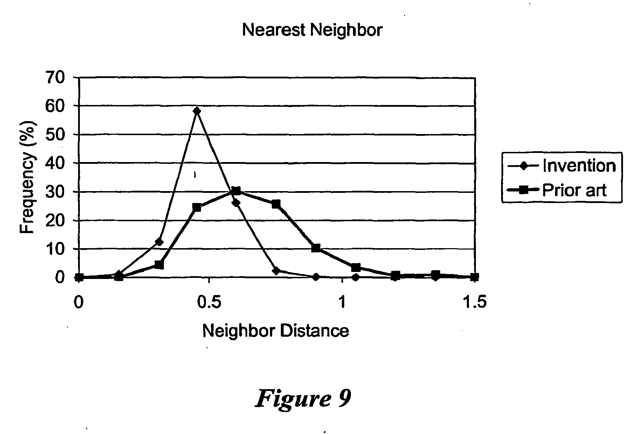

Figure 9 shows a graphical representation of the Nearest Neighbor data for the two membranes.

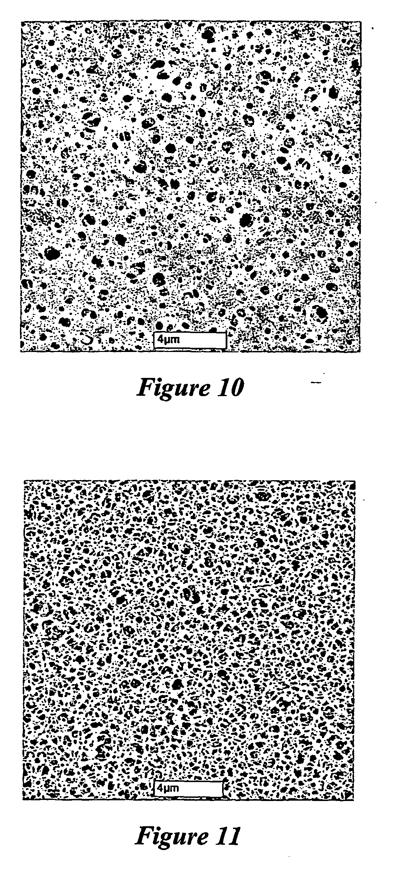

Figure 10 shows a photomicrograph of the tight surface of the membrane used in this example.

Figure 11 shows a photomicrograph of the tight surface of the prior art membrane used in the example.

The fractionated Area Percent for the membrane similar to one produced according to the present invention is more than 2 times that of the prior art membrane. Likewise, the spacing between adjacent pores on the tight surface or the membrane similar to the one produced according to the present invention is nearly half that of the prior art membrane.

## Claims

1. A method of producing an asymmetrical microporous membrane suitable for high throughput applications, comprising:
pre-forming a single layered membrane or a multiple-layered asymmetrical membrane of polymeric material, wherein the membrane has a tight side and an open side and the tight side has a skin surface,
surface modifying said pre-formed membrane by forming a reticulated porous surface on the tight side of said pre-formed membrane by partial removal of said polymeric material on the tight side chemically or by exposure to electromagnetic radiation so that the resulting modified membrane has a tight side and an open side, said reticulated porous surface being located on said tight side, and so that the resulting modified membrane has a bubble point normalized serum flow time of less than about 2.9x10⁻⁴ sec/Pa (2 sec/psi) which can be determined according to the following test procedure applied to a 47mm sample disk of the membrane:
- conducting a flow time test with a test serum solution made of 1 liter of Fetal Bovine Serum, 133.7 g (1 bottle) of Dubelco Modified Eagle medium, 37 g of sodium bicarbonate, 100 ml Hepes solution and 10 l deionized water,
- applying a vacuum of 54182.21 Pa (16 Inches Hg) to a sample asymmetrical microporous membrane and measuring the flow time in seconds required for filtering 500ml of the test serum solution through the sample asymmetrical microporous membrane,
- measuring the water bubble point on the sample asymmetrical microporous membrane in 6894.75 Pa (1 psi), and
- dividing the measured flow time by the measured bubble point.

## Patentansprüche

1. Ein Verfahren zum Herstellen einer asymmetrischen mikroporösen Membran, welche für Anwendungen mit hohem Durchsatz geeignet ist, mit den Schritten:
Vorformen einer Einzelschichtmembran oder einer asymmetrischen Mehrschichtmembran aus Polymerwerkstoff, wobei die Membran eine dichte Seite und eine offene Seite besitzt und die dichte Seite eine hautartige Oberfläche ("skin surface") besitzt,
Oberflächenmodifizieren der vorgeformten Membran durch Ausbilden einer retikularen porösen Oberfläche auf der dichten Seite der vorgeformten Membran durch teilweises Entfernen des Polymerwerkstoffs an der dichten Seite, chemisch oder durch Bestrahlung mit elektromagnetischer Strahlung, so dass die resultierende modifizierte Membran eine dichte Seite und eine offene Seite besitzt, wobei die retikulare poröse Oberfläche an der dichten Seite gelegen ist und so ist, dass die resultierende modifizierte Membran eine normierte "Bubble point"-Serum-Strömungszeit ("normalized serum flow time") von weniger als etwa 2,9 x 10⁻⁴ sek/Pa (2 sec/psi) besitzt, die gemäß der folgenden, auf eine 47mm Probenscheibe der Membran angewandte Testprozedur bestimmt werden kann:
- Durchführen eines Strömungszeittests mit einer Testserumlösung, die aus 1 Liter "Fetal Bovin Serum", 133,7 g (1 Flasche) von "Dubelco Modified Eagle"-Medium, 37 g Natriumbicarbonat, 100 ml "Hepes"-Lösung und 10 l entionisiertem Wasser hergestellt wird,
- Anwenden eines Unterdrucks von 54182,21 Pa (16 Inch Hg) auf eine asymmetrisch mikroporöse Probemembran und Messen der Strömungszeit in Sekunden, die erforderlich ist, um 500ml der Testserumlösung durch die asymmetrische mikroporöse Probemembran zu filtern,
- Messen des Wasser-"Bubble points" an der asymmetrischen mikroporösen Probemembran bei 6894,75 Pa (1 psi) und
- Teilen der gemessenen Strömungszeit durch den gemessenen "Bubble point".

## Revendications

1. Procédé pour la production d'une membrane microporeuse asymétrique apte à des applications à haut débit, comprenant :
la préformation d'une membrane monocouche ou d'une membrane asymétrique multicouche de matière polymère, ladite membrane ayant une face étanche et une face ouverte et la face étanche comportant une surface pelliculaire,
la modification de surface de ladite membrane préformée en formant une surface poreuse réticulée sur le côté étanche de ladite membrane préformée par élimination partielle de ladite matière polymère sur le côté étanche par un agent chimique ou par exposition à un rayonnement électromagnétique de telle sorte que la membrane modifiée résultante ait une face étanche et une face ouverte, ladite surface poreuse réticulée étant située sur ladite face étanche, et de telle sorte que la membrane modifiée résultante ait un temps d'écoulement de sérum normalisé en fonction du point de bulle inférieur à environ 2,9 x 10⁴ s/Pa (2s/psi) qui peut être déterminé par le mode opératoire d'essai suivant appliqué à un disque de 47 mm, servant d'échantillon, de la membrane :
- mise en oeuvre d'un test de détermination de temps d'écoulement avec une solution de sérum d'essai constituée d'1 1 de sérum de foetus bovin, 133,7 g (1 bouteille) de milieu de Eagle modifié par Dulbecco, 37 g de bicarbonate de sodium, 100 ml de solution de Hepes et 10 1 d'eau désionisée,
- application d'un vide de 54 182,21 Pa (16 inches de Hg) à une membrane microporeuse asymétrique servant d'échantillon et mesure du temps d'écoulement, en secondes, requis pour la filtration de 500 ml de la solution de sérum d'essai à travers la membrane microporeuse asymétrique servant d'échantillon,
- mesure du point de bulle de l'eau sur la membrane microporeuse asymétrique servant d'échantillon à 6894,75 Pa (1 psi), et
- division du temps d'écoulement mesuré par le point de bulle mesuré.
